# EUROPEAN PATENT APPLICATION

(11) **EP 3 909 690 A1**
(43) Date of publication of application: **17.11.2021**
(21) Application number: 20855171.3
(22) Date of filing: 03.08.2020
(51) Int. Cl.: B05C 13/02, H01M 4/04, B05C 1/06

(54) **ELECTRODE, AND APPARATUS AND METHOD FOR MANUFACTURING SAME**

(30) Priority: 21.08.2019 KR 20190102668
(71) Applicant: LG ENERGY SOLUTION, LTD., Seoul 07335 (KR)
(72) Inventor: JEONG, An Soo, Daejeon 34122 (KR)
(74) Representative: Plasseraud IP
(86) International application number: PCT/KR2020/010198
(87) International publication number: WO 2021/033955

(57) **Abstract**

The present invention relates to an apparatus for manufacturing an electrode. The apparatus for manufacturing the electrode comprises: a supply member configured to supply a collector; an attachment member configured to attach a coating paper to a top surface of the collector supplied by the supply member at set intervals; and a first injection member that operates to inject an electrode active material to the top surface of the collector, thereby forming a first coating layer when the collector passes through a first section and stops so as not to inject the electrode active material when the coating paper attached to the collector passes through the first section.

## Description

### CROSS-REFERENCE TO RELATED APPLICATION

The present application claims the benefit of the priority of Korean Patent Application No. 10-2019-0102668, filed on August 21, 2019, which is hereby incorporated by reference in its entirety.

### TECHNICAL FIELD

The present invention relates to an electrode and an apparatus and method for manufacturing the same, and more particularly, to an electrode and an apparatus and method for manufacturing the same, which are capable of improving productivity when the electrode is manufactured and preventing an irregular coating portion (commonly, referred to as a hump) from being generated.

### BACKGROUND ART

In general, secondary batteries refer to chargeable and dischargeable batteries, unlike primary batteries that are not chargeable. The secondary batteries are being widely used in the high-tech electronic fields such as mobile phones, notebook computers, and camcorders.

Such a secondary battery comprises an electrode assembly, an electrode lead coupled to the electrode assembly, and a pouch accommodating the electrode assembly in a state in which a front end of the electrode lead is drawn out. The electrode assembly has a structure in which electrodes and separators are alternately stacked, and the pouch comprises an accommodation part accommodating the electrode assembly and a sealing part provided along an edge of the accommodation part to seal the accommodation part.

The electrode has a structure comprising a coating portion coated with an electrode active material and a non-coating portion without the electrode active material. A method of manufacturing the electrode having the above structure comprises a transfer step of transferring a collector and a coating step of applying an electrode active material to the collector to form a coating portion.

However, the above-described method for manufacturing the electrode has a limitation in improving productivity of the electrode, and in particular, there is a problem in that an irregular coating portion (i.e., hump) having a convex shape is generated at each of both ends of the coating portion applied to the electrode.

### DISCLOSURE OF THE INVENTION

### TECHNICAL PROBLEM

The present invention is invented to solve the above problem, and an object of the present invention is to provide an electrode and an apparatus and method for manufacturing the same, which are capable of improving productivity of the electrode and preventing irregular coating portion from being generated on both ends of the coating portion.

### TECHNICAL SOLUTION

An apparatus for manufacturing an electrode according to the present invention for achieving the above object comprises: a supply member configured to supply a collector; an attachment member configured to attach a coating paper to a top surface of the collector supplied by the supply member at set intervals; and a first injection member that operates to inject an electrode active material to the top surface of the collector, thereby forming a first coating layer when the collector passes through a first section and stops so as not to inject the electrode active material when the coating paper attached to the collector passes through the first section.

The coating paper may comprise: an adhesive portion which is disposed on each of both ends in a longitudinal direction of the collector and is attached to the collector; and a non-adhesive portion which is disposed between the adhesion portions and is not attached to the collector, wherein the adhesive portion may pattern-adhere to the collector through the patterned adhesive layer.

The apparatus may further comprise: a brush member configured to comb an entire top surface of the first coating layer applied to the collector to planarize the entire top surface of the first coating layer and form a comb pattern mark; and a second injection member which operates to inject the electrode active material to the top surface of the first coating layer, thereby forming a second coating layer when the collector passing through the brush member passes through the second section and stops so as not to inject the electrode active material when the coating paper attached to the collector passes through the second section, wherein a portion of the electrode active material injected by the second injection member may be introduced into the comb pattern mark formed on the first coating layer to increase in bonding force between the first coating layer and the second coating layer.

The second injection member may apply the second coating layer to a thickness less than that of the first coating layer.

The brush member may comprise: a rotary roller provided above the collector; and a comb part into which a plurality of comb hairs provided on the rotary roller to comb the top surface of the first coating layer applied to the collector are implanted.

The comb part may be detachably coupled to a coupling groove formed in the rotary roller.

An elastic part configured to elastically support the comb part coupled to the coupling groove may be provided in the coupling groove.

The brush member may further comprise an adjustment part by which the rotary roller moves in a direction toward or opposite to the collector to adjust a distance between the rotary roller and the collector.

The apparatus may further comprise a removing member configured to remove the coating paper attached to the collector, wherein the removing member may have a long rod shape and is inserted between the non-adhesive portion of the coating paper and the collector to push the coating paper in a direction that is away from the collector, thereby removing the coating paper.

A method for manufacturing an electrode according to the present invention comprises: a supply step (S10) of supplying a collector; an attachment step (S20) of attaching a coating paper to a top surface of the collector at set intervals; and a first coating step (S30) in which a first injection member operates to inject an electrode active material to a top surface of the collector so as to form a first coating layer when the collector passes through a first section and stops so as not to inject the electrode active material when the coating paper attached to the collector passes through the first section.

The method may further comprise: after the first coating step (S30), a combing step (S40) of combing a top surface of the first coating layer applied to the collector to planarize the top surface of the first coating layer and simultaneously form a comb pattern mark; after the combing step (S40), a second coating step (S50) in which the second injection member supply member operates to inject the electrode active material to the top surface of the first coating layer so as to form a second coating layer when the collector passes through a second section and stops so as not to inject the electrode active material when the coating paper attached to the collector passes through the second section; and a removing step (S60) of removing the coating paper attached to the collector to complete an electrode on which the coating layer is formed at certain intervals, wherein, in the second coating step (S50), a portion of the electrode active material injected to the top surface of the first coating layer may be introduced into the comb pattern mark formed on the first coating layer to increase in bonding force between the first coating layer and the second coating layer.

In the attachment step (S20), the coating paper may be attached to the collector through an adhesive portion formed on each of both ends of the coating paper to form an adhesive area, and a non-adhesive area spaced apart from the collector may be formed through a non-adhesive portion between the adhesive portions.

In the combing step (S40), the top surface of the first coating layer may be combed using a comb part, into which a plurality of comb hairs coupled to a rotary roller are implanted, to planarize the top surface of the first coating layer and simultaneously form the comb pattern mark.

In the combing step (S40), the rotary roller may move in a direction toward or opposite to the collector to adjust a distance between the rotary roller and the collector.

In the removing step (S60), the coating paper may be pushed in a direction that is away from the collector through a non-adhesive area between the coating paper and the collector so as to be removed from the collector.

An electrode according to the present invention comprise: a collector; and a coating layer applied to the collector at set intervals, wherein the coating layer comprises a firs coating layer applied to a top surface of the collector and a second coating layer applied to the top surface of the first coating layer, the comb pattern mark is formed on the top surface of the first coating layer, and a portion of the second coating layer applied to the top surface of the first coating layer is introduced into the comb pattern mark to increase in bonding force between the first coating layer and the second coating layer.

### ADVANTAGEOUS EFFECTS

The apparatus for manufacturing the electrode according to the present invention may comprise the supply member, the attachment member, and the first injection member. Therefore, the loss of the electrode active material may be minimized to improve the productivity, and the irregular coating portion may be prevented from being generated on both the ends of the first coating layer.

In addition, in the apparatus for manufacturing the electrode according to the present invention, the coating paper may comprise the adhesive portion and the non-adhesive portion. Therefore, the coating paper may be easily removed from the collector. Particularly, the adhesive portion may pattern adhere to the collector. Therefore, the adhesive area between the coating paper and the collector may be minimized while maintaining the adhesive range between the coating paper and the collector as it is, and as a result, the coating paper may be more easily removed from the collector.

In addition, the apparatus for manufacturing the electrode according to the present invention may comprise the brush member and the second injection member. Therefore, the top surface of the first coating layer applied to the collector may be planarized to more uniformly form the thickness of the coating layer comprising the first and second coating layers, in particular, the bonding force between the first coating layer, which is applied by the first injection member, and the second coating layer, which is applied by the second injection member, may be improved through the comb pattern mark formed on the top surface of the first coating layer.

In addition, in the apparatus for manufacturing the electrode according to the present invention, the second coating layer may be applied to the thickness less than that of the first coating layer, and the electrode active material slurry forming the second coating layer may be formed with the particles that are smaller than those of the electrode active material slurry forming the first coating layer. Therefore, the coating layer applied to the collector may be more uniformly planarized.

In addition, in the apparatus for manufacturing the electrode according to the present invention, the brush member may comprise the rotary roller and the comb part. Here, the comb part may be detachably coupled to the coupling groove of the rotary roller. Therefore, the top surface of the first coating layer may be stably planarized, and simultaneously, the comb pattern mark may be formed on the top surface. Particularly, the comb part may be easily replaced and mounted from the rotary roller, thereby improving the convenience of use and ease of maintenance.

In the comb part, the plurality of comb hairs are implanted. Here, the plurality of comb hairs may have different strengths, thicknesses, and lengths. Therefore, the comb pattern mark having the irregular shape may be formed on the top surface of the first coating layer. As a result, the bonding force between the first coating layer and the second coating layer may significantly increase.

In addition, in the apparatus for manufacturing the electrode according to the present invention, the brush member may comprise the elastic part that elastically supports the comb part. Therefore, the comb hairs implanted in the comb part may comb the surface of the first coating layer while elastically pressing the surface of the first coating layer to prevent the comb hairs from being damaged.

### BRIEF DESCRIPTION OF THE DRAWINGS

FIG. 1 is a cross-sectional view of an electrode according to a first embodiment of the present invention.
FIG. 2 is a schematic view of an apparatus for manufacturing an electrode according to a second embodiment of the present invention.
FIG. 3 is a side view of a coating paper used in the apparatus for manufacturing the electrode according to the second embodiment of the present invention.
FIG. 4 is a perspective view illustrating a brush device of the apparatus for manufacturing the electrode according to the second embodiment of the present invention.
FIG. 5 is a side view of FIG. 4.
FIG. 6 is a plan view of a collector to which a first coating layer is applied.
FIG. 7 is a cross-sectional view taken along line C-C of FIG. 6.
FIG. 8 is a cross-sectional view illustrating a state in which a second coating layer is applied.
FIG. 9 is a perspective view illustrating a removing member of the apparatus for manufacturing the electrode according to the second embodiment of the present invention.
FIG. 10 is a flowchart illustrating a method for manufacturing an electrode according to the second embodiment of the present invention.
FIG. 11 is a cross-sectional view of an apparatus for manufacturing an electrode according to a third embodiment of the present invention.

### MODE FOR CARRYING OUT THE INVENTION

Hereinafter, embodiments of the present invention will be described in detail with reference to the accompanying drawings in such a manner that the technical idea of the present invention may easily be carried out by a person with ordinary skill in the art to which the invention pertains. The present invention may, however, be embodied in different forms and should not be construed as limited to the embodiments set forth herein. In the drawings, anything unnecessary for describing the present invention will be omitted for clarity, and also, like reference numerals in the drawings denote like elements.

### [Electrode according to first embodiment of the present invention]

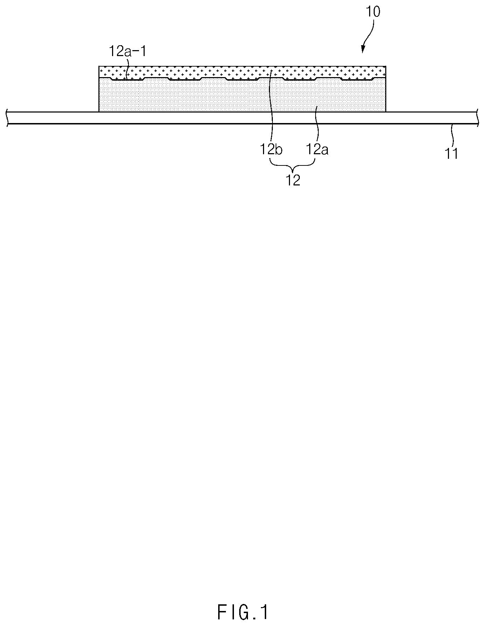

As illustrated in FIG. 1, an electrode 10 according to a first embodiment of the present invention comprises a collector 11 and a coating layer 12 applied to the collector 11 at set intervals. The coating layer 12 comprises a first coating layer 12a applied to a top surface of the collector 11 and a second coating layer 12b applied to a top surface of the first coating layer 12a.

Here, the electrode 10 comprises a positive electrode or a negative electrode, and the first coating layer 12a and the second coating layer 12b are made of electrode active materials having the same polarity.

The second coating layer 12b has a thickness less than that of the first coating layer 12a. That is, the second coating layer 12b has electrode active material particles smaller than those of the first coating layer 12a and is applied to a thickness less than that of the first coating layer 12a. A thickness of the coating layer 12 comprising the first and second coating layers 12a and 12b may be more uniformly adjusted and planarized.

Also, a plurality of comb pattern marks 12a-1 are formed on the top surface of the first coating layer 12a, and the comb pattern marks 12a-1 may increase in bonding force between the first coating layer 12a and the second coating layer 12b because a portion of the second coating layer 12b applied to the top surface of the first coating layer 12a is introduced to increase in bonding area between the first coating layer 12a and the second coating layer 12b.

The plurality of comb pattern marks 12a-1 are irregularly formed on the top surface of the first coating layer 12a or have different sizes to increase in bonding force between the first coating layer 12a and the second coating layer 12b. Particularly, some of the plurality of comb pattern marks 12a-1 may overlap or cross each other.

Although the plurality of comb pattern marks 12a-1 are shown as grooves in the drawings of the present application, the plurality of comb pattern marks 12a-1 may be formed as protrusions protruding to the outside or may be formed with grooves and protrusions.

The electrode 10 according to the first embodiment of the present invention having the above-described configuration is manufactured by the apparatus 100 for manufacturing the electrode. Hereinafter, an apparatus 100 for manufacturing an electrode according to a second embodiment of the present invention will be described in detail below.

### [Apparatus for manufacturing electrode according to second embodiment of the present invention]

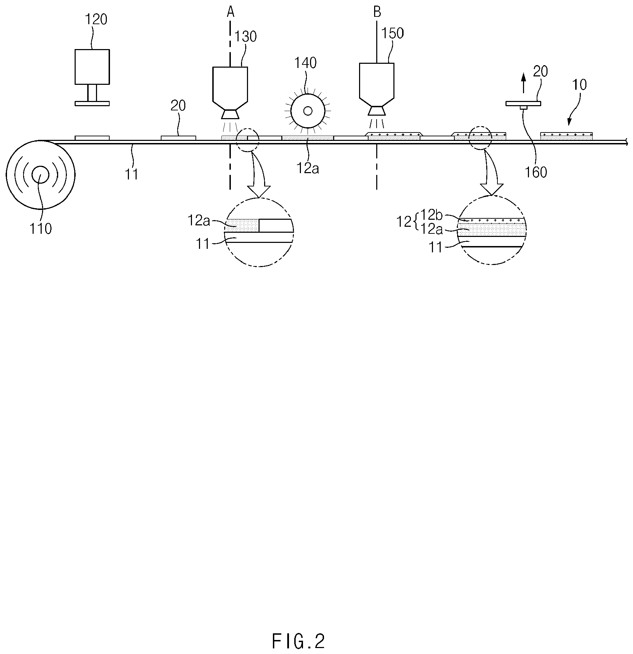

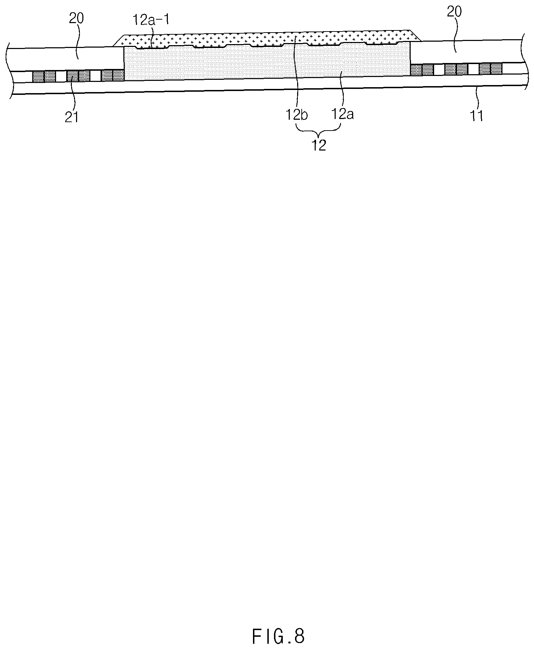

As illustrated in FIGS. 2 to 9, an apparatus 100 for manufacturing an electrode according to a second embodiment of the present invention is configured to manufacture an electrode on which an electrode active material is pattern applied and comprises a supply member 110 supplying a collector 11, an attachment member 120 attaching a coating paper 20 to a top surface of the collector 11 supplied by the supply member 110 at set intervals, a first injection member 130 injecting an electrode active material to the top surface of the collector 11 to form a first coating layer 12a, a brush member 140 planarizing an entire top surface of the first coating layer 12a applied to the collector 11, a second injection member 150 forming a second coating layer 12b on a top surface of the first coating layer 12a, and a removing member 160 removing the coating paper 20 attached to the collector 11.

### Supply member

Referring to FIG. 2, the supply member 110 comprises a supply roller around which the collector 11 is wound. The supply roller supplies the collector 11 so that the collector 11 sequentially passes through a first section A and a second section B, which are displayed in FIG. 2.

The supply member 110 may be temporarily stopped at the moment at which the coating paper 20 is attached to the top surface of the collector 11. Thus, the coating paper 20 may be stably attached to the top surface of the collector 11 and an interval between the coating papers 20 may be constantly maintained.

### Attachment member

The attachment member 120 attaches the coating paper 20 to the top surface of the collector 11 supplied from the supply member 110 at set intervals.

That is, the attachment member 120 adsorbs the coating paper 20 stacked on the uppermost end among the coating papers 20 stacked in a loading box (not shown) to attach the adsorbed coating paper 20 to the top surface of the collector 11.

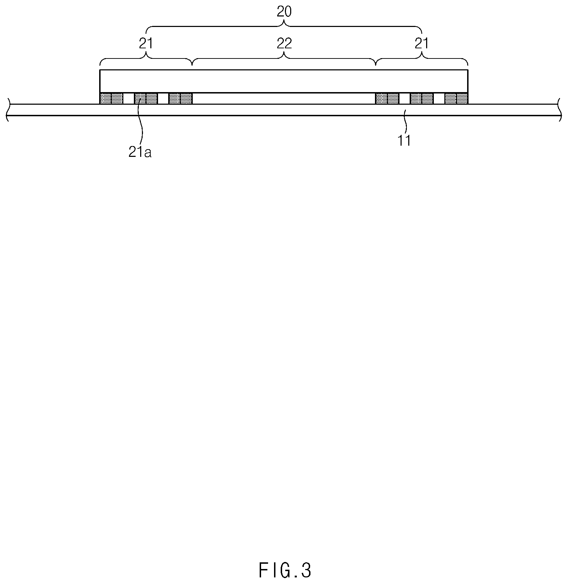

Here, as illustrated in FIG. 3, the coating paper 20 comprises an adhesive portion 21 disposed on both ends (left end and right end when viewed in FIG. 3) in a longitudinal direction of the collector 11 and attached to the collector 11 and a non-adhesive portion 22 which is disposed between the adhesive portions 21 and is not attached to the collector 11.

The coating paper 20 having the above-described structure may minimize the adhesive area between the collector 11 and the coating paper 20. Thus, the coating paper 20 may be easily removed from the collector 11. Particularly, the adhesive portion 21 may be limited to both ends of the coating paper 20. Thus, a gap between the collector 11 and the end of the coating paper 20 may be sealed to prevent the electrode active material from being introduced between the collector 11 and the coating paper 20. Particularly, the adhesive layer 21a formed on the adhesive portion 21 may be formed as a patterned adhesive layer. Thus, the adhesive area between the coating paper 20 and the collector 11 may be minimized while maintaining an adhesive range between the coating paper 20 and the collector 11 as it is. As a result, the coating paper 20 may be more easily removed from the collector 11.

### First injection member

The first injection member 130 is configured to form a first coating layer on the top surface of the collector. When the collector 11 passes the first section A, the first injection member 130 operates to inject the electrode active material to the top surface of the collector 11, thereby forming a first coating layer 12a. When the coating paper 20 attached to the collector 11 passes through the first section A, the first injection member 130 stops so as not to inject the electrode active material.

That is, the first injection member 130 repeatedly operates and stops depending on whether the coating paper 20 is attached to the collector 11 to inject the electrode active material to only the top surface of the collector 11, on which the coating paper 20 is not attached, thereby forming the first coating layer 12a.

As described above, the first injection member may repeatedly operate and stop to form the first coating layer 12a on only the top surface of the collector 11, on which the coating paper 20 is not attached, thereby minimizing a loss of the electrode active material.

When the first injection member 130 operates and stops, a large amount of electrode active material may be injected, and thus, an irregular coating portion, i.e., a hump may be generated at a coating start point and a coating end point of the first coating portion 12a. However, since the irregular coating portion is applied to the top surface of the coating paper 20, when the coating paper 20 is subsequently removed from the collector 11, the irregular coating portion may be easily removed together with the coating paper 20.

### Brush member

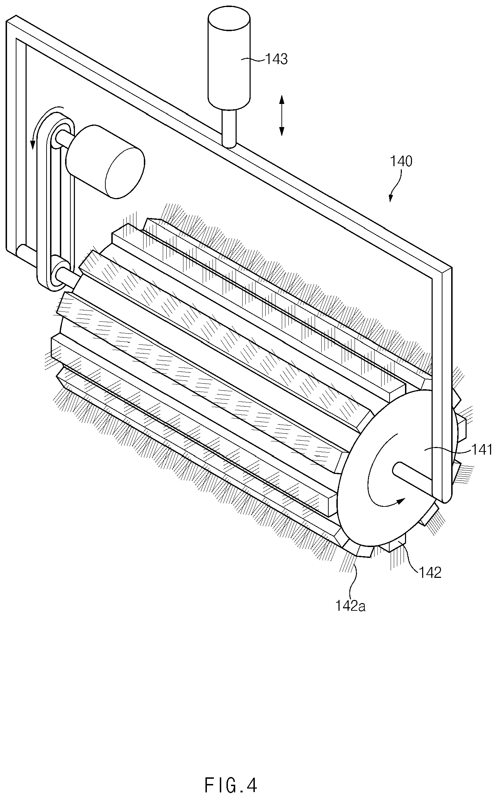

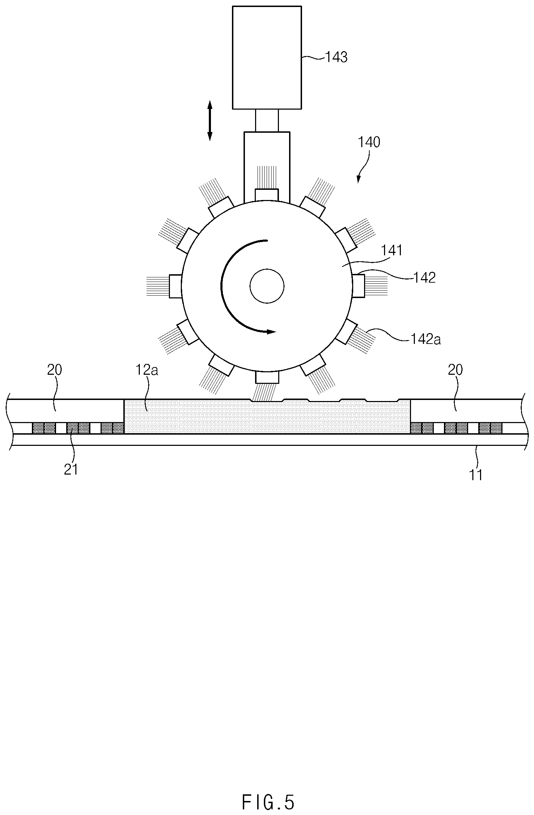

Referring to FIGS. 4 and 5, the brush member 140 is configured to uniformly planarize an entire top surface of the first coating layer and form the comb pattern mark. The brush member 140 combs the entire top surface of the first coating layer 12a applied to the collector 11 to planarize the entire top surface of the first coating layer 12a and simultaneously form the comb pattern mark 12a-1.

That is, the brush member 140 comprises a rotary roller 141 provided above the collector 11 and a comb part 142 into which a plurality of comb hairs 142a provided on the rotary roller 114 to comb the entire top surface of the first coating layer 12a applied to the collector 11 are implanted.

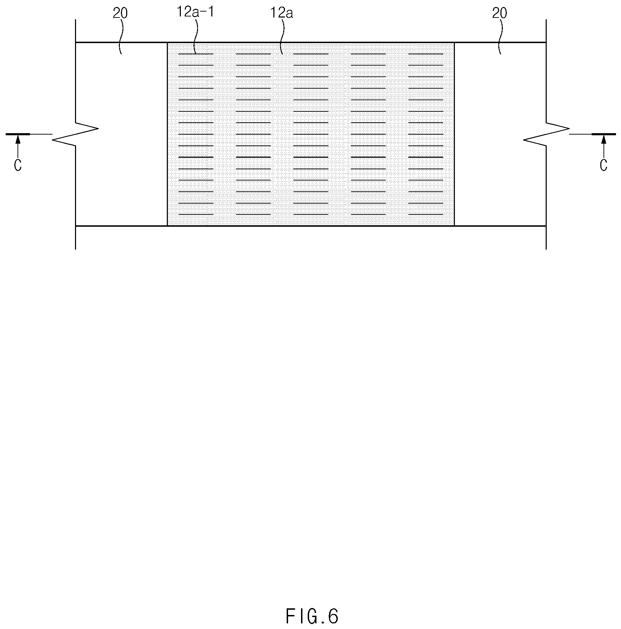

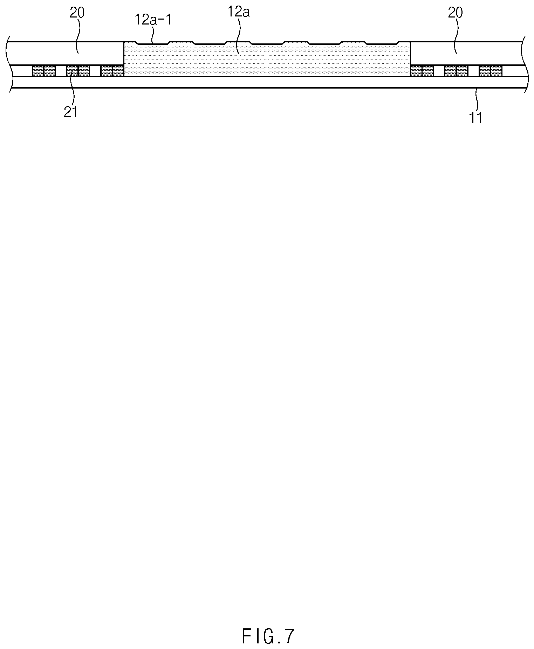

As illustrated in FIGS. 6 and 7, in the brush member 140 having the above-described structure, when the rotary roller 141 rotates, the comb part 142 rotates together with the rotary roller 141. Here, the comb hairs 142a implanted in the comb part 142 comb the entire top surface of the first coating layer 12a applied to the collector 11 to remove foreign substances remaining on the first coating layer 12a and simultaneously planarize the surface. That is, the brush member 140 performs the planarization so that the entire top surface of the first coating layer 12a has the same height when viewed from the top surface of the collector 11. Here, the irregular coating portion is also planarized.

The plurality of comb hairs 142a may have different sizes, thicknesses, and lengths. That is, if the plurality of comb hairs 142a have different sizes, thicknesses, and lengths, the comb pattern mark 12a-1 formed on the entire top surface of the first coating layer 12a may be irregularly formed. Thus, total adhesive strength between the first coating layer and the second coating layer may be adjusted.

The brush member 140 may further comprise an adjustment part 143 by which the rotary roller 141 moves in a direction toward or opposite to the collector 11 to adjust a distance between the rotary roller 141 and the collector 11. The adjustment part 143 may easily adjust a position of the rotary roller 141 according to a thickness of the first coating layer, and thus, the position of the comb hairs 142a pressing the first coating layer 12a may be adjusted to adjust a depth of the mark formed on the first coating layer 12a.

### Second injection member

The second injection member 150 is configured to form a second coating layer. When the collector 11 passing through the brush member 140 passes the second section B, the second injection member 150 operates to inject the electrode active material to the top surface of the first coating layer 12a, thereby forming a second coating layer 12b. When the coating paper 20 attached to the collector 11 passes through the second section B, the second injection member 150 stops so as not to inject the electrode active material. Here, a portion of the electrode active material injected to the top surface of the first coating layer 12a may be introduced into the comb pattern mark 12a-1 formed on the top surface of the first coating layer 12a. As a result, an adhesive area between the first and second coating layers 12a and 12b may increase. Particularly, when viewed in FIG. 4, horizontal adhesive force and vertical adhesive force between the first and second coating layers 12a and 12b may be generated at the same time, and thus, the first and second coating layers 12a and 12b may be firmly bonded to each other.

The second injection member 150 may apply the second coating layer 12b to a thickness less than that of the first coating layer 12a. That is, the second injection member 150 may apply the second coating layer 12b to the thickness less than that of the first coating layer 12a to prevent the irregular coating portion, i.e., the hump from being generated on a coating start point and a coating end point of the second coating layer 12b or minimize the generation of the irregular coating portion.

Particularly, the second injection member 150 may apply electrode active material slurry having particles smaller than those of the electrode active material slurry of the first coating layer 12a to the second coating layer 12b to more uniformly planarize the surface of the second coating layer 12b.

As the first and second coating layers 12a and 12b are bonded to each other, the coating layer 12 is formed on the top surface of the collector 11.

### Removing member

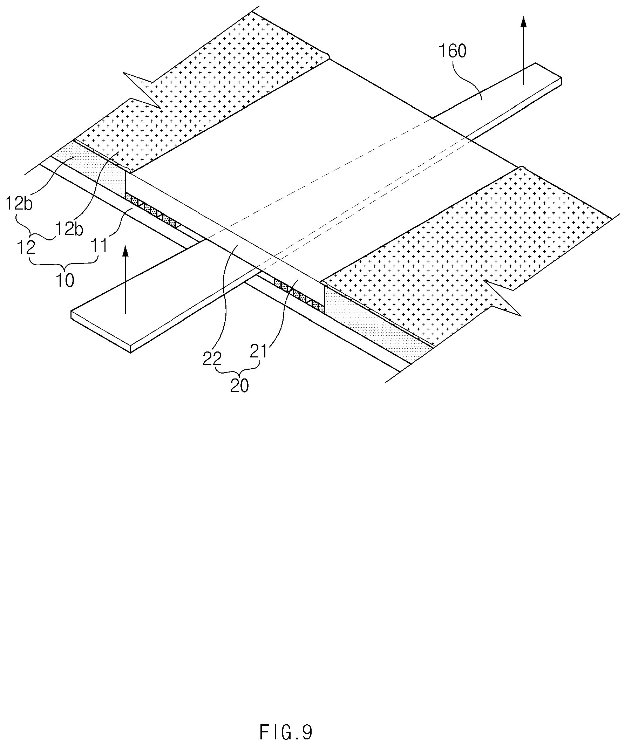

Referring to FIG. 9, the removing member 160 is configured to remove the coating paper attached to the collector. The removing member 160 has a long rod shape and is inserted between the non-adhesive portion 22 of the coating paper 20 and the collector 11 to push the coating paper 20 in a direction that is away from the collector 11, thereby removing the coating paper 20. Here, the removing member 160 may have a width that gradually increases from a front end to a rear end thereof. Thus, the front end of the removing member 160 may be easily inserted between the non-adhesive portion 22 and the collector 11 and may stably push the coating paper 20 through the rear end in the direction that is away from the collector 11 to remove the coating paper 20.

When the removing member 160 removes the coating paper 20 from the collector 11, the irregular coating portion generated on the coating layer 12 may also be removed to form the coating layer without the irregular coating portion.

Thus, the electrode manufacturing apparatus 100 according to the second embodiment of the present application may form the coating layer without the irregular coating portion at the set intervals on the surface of the collector.

A manufacturing method using the apparatus 100 for manufacturing the electrode according to the second embodiment of the present application, which have the above configuration will be described.

### [Method for manufacturing electrode according to second embodiment of the present invention]

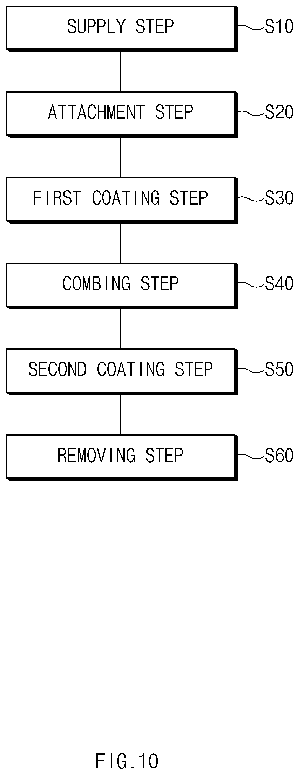

As illustrated in FIG. 10, a method for manufacturing an electrode according to the second embodiment of the present application comprises a supply step (S10) of supplying a collector 11, an attachment step (S20) of attaching a coating paper 20 to a top surface of the collector 11 at set intervals, a first coating step (S30) of forming a first coating layer 12a on the top surface of the collector 11 when the collector 11 passes through a first section A, a combing step (S40) of planarizing a top surface of the first coating layer 12a and simultaneously forming a comb pattern mark 12a-1, a second coating step (S50) of forming a second coating layer 12b on the top surface of the first coating layer 12a when the collector 11 passes through a second section B, and a removing step (S60) of removing the coating paper 20.

### Supply step

In the supply step (S10), the collector 11 wound around a supply member 110 is supplied to sequentially pass through the first section A and the second section B.

### Attachment step

In the attaching step (S20), the coating paper 20 is attached to the top surface of the collector 11 through the attachment member 120 at the set intervals.

Here, in the attachment step (S20), the coating paper 20 is attached to the collector 11 to form an adhesive area through an adhesive portion 21 formed on each of both ends of the coating paper 20 and an non-adhesive area, which is spaced apart from the collector 11, through a non-adhesive portion 22 between the adhesive portions 21.

The adhesive portion 21 forms an adhesive layer 21a, and the adhesive layer 21a is provided as a pattern adhesive layer to allow the adhesive portion 21 to pattern adhere to the collector 11. Accordingly, adhesive strength may be minimized while maintaining an adhesive range as it is.

### First coating step

In the first coating step (S30), when the collector 11 without the coating paper 20 passes through the first section A, the first injection member 130 operates to inject an electrode active material to the top surface of the collector 11, thereby forming the first coating layer 12a. Also, when the coating paper 20 attached to the collector 11 passes through the first section A, the first injection member 130 stops so as not to inject the electrode active material. Thus, in the first coating step (S30), the first coating layer 12a is formed on only the top surface of the collector 11, on which the coating paper 20 is not formed, to minimize a loss of the electrode active material.

In the first coating step (S30), when the first injection member 130 operates and stops, a large amount of electrode active material is applied to a coating start point and a coating end point of the first coating layer 12a to form an irregular coating portion. However, since the irregular coating portion is disposed on the top surface of the coating paper 20, the irregular coating portion may be removed together when the coating paper 20 is removed later. As a result, the irregular coating portion may be prevented from being formed on the coating layer.

### Combing step

In the combing step (S40), the entire top surface of the first coating layer 12a applied to the collector 11 is combed through the brush member 140 to planarize the top surface of the first coating layer 12a and simultaneously to form the comb pattern mark 12a-1. That is, when the rotary roller 141 rotates, the brush member 140 is interlocked with the rotary roller 141 so that the comb part 142 rotates, and then, comb hairs 142a implanted in the comb part 142 rotate to comb the first coating layer 12a that is pressed by the comb hairs 142a. Thus, foreign substances remaining on the first coating layer 12a may be easily removed, and the top surface of the first coating layer 12a may be planarized to the same height when viewed from the top surface of the collector 11.

Particularly, the irregular coating portion formed at each of the coating start point and coating end point of the first coating layer 12a, i.e., a hump may be combed to be planarized at the same height as the top surface of the first coating layer 12a, and the comb pattern mark 12a-1 may be formed on the top surface of the first coating layer 12a.

Here, in the present application, although the comb pattern mark 12a-1 is formed in a transfer direction of the collector 11 according to an embodiment, the comb pattern mark 12a-1 may be formed in a direction perpendicular to the transfer direction of the collector 11. In addition, when the rotary roller 141 rotates in a horizontal direction rather than a vertical direction, the comb pattern mark 12a-1 may be formed in a circular shape on the top surface of the first coating layer 12a. Of course, all of the comb pattern marks 12a-1 may be formed on the top surface of the first coating layer 12a. Thus, the comb pattern marks 12a-1 may be formed to increase in bonding force between the first and second coating layers 12a and 12b.

In the combing step (S40), when adjusting a gap between the comb hairs and the first coating layer, the rotary roller 141 may move in a direction toward or opposite to the collector 11 through an adjustment pat 143 to adjust a distance between the comb hairs 142a of the comb part 142 and the first coating layer applied to the collector 11, thereby adjusting a depth of the comb pattern mark 12a-1.

### Second coating step

In the second coating step (S50), after the combing step (S40), when the collector 11 passes through the second section B, the second injection member 150 operates to inject the electrode active material to the entire top surface of the first coating layer 12a, thereby forming a second coating layer 12b. When the coating paper 20 attached to the collector 11 passes through the second section B, the second injection member 150 stops so as not to inject the electrode active material.

Here, the electrode active material injected to the entire top surface of the first coating layer 12a may be introduced into the comb pattern mark 12a-1 formed on the top surface of the first coating layer 12a to increase in bonding area between the first and second coating layers 12a and 12b, thereby improving bonding force between the first and second coating layers 12a and 12b.

Particularly, the second injection member 150 applies the second coating layer 12b to a thickness less than that of the first coating layer 12a. Thus, the formation of the irregular coating portion at the coating start point and the coating end point of the first coating portion 12b may be minimized or prevented. In addition, the second coating layer 12b has electrode active material particles smaller than those of the first coating layer 12a, and thus, the top surface of the coating layer 12 may be more uniformly planarized.

### Removing step

In the removing step (S60), the coating paper 20 attached to the collector 11 is removed through a removing member 160 to complete the electrode 10 on which the coating layers 12 are formed at regular intervals.

That is, when the removing member 160 pushes the coating paper 20 in a direction away from the collector 11 through the non-adhesive area between the non-adhesive portion 22 of the coating paper 20 and the collector 11, the coating paper 20 may be removed from the collector 11.

Hereinafter, in descriptions of another embodiment of the present invention, constituents having the same configuration and function as the above-mentioned embodiment have been given the same reference numeral in the drawings, and thus duplicated description will be omitted.

### [Apparatus for manufacturing electrode according to third embodiment of the present invention]

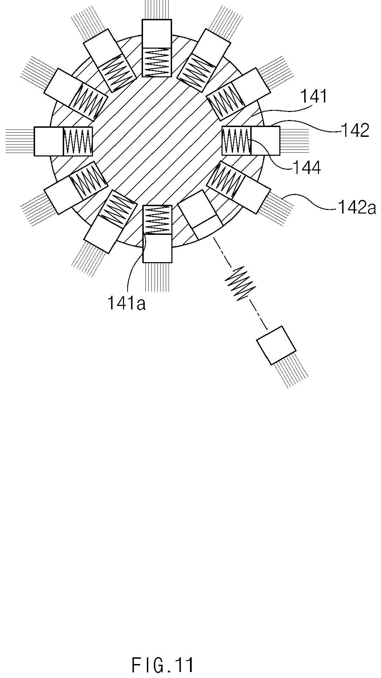

As illustrated in FIG. 11, an apparatus for manufacturing an electrode according to a third embodiment of the present invention comprises a brush member 140 comprising a comb part 142.

Here, the comb part 142 may be detachably coupled to a coupling groove 141a formed in a rotary roller 141. Thus, when comb hairs 142a implanted in the comb part 142 are worn over a predetermined length, the comb part 142 may be removed from the rotary roller 141, and a new comb part 142 may be mounted on the rotary roller 141 to improve ease of use and maintenance.

An elastic part 144 elastically supporting the comb part 142 may be provided in the coupling groove 141a. The elastic part 144 is provided as a spring. Therefore, the comb part 142 may comb the first coating layer in a state of elastically pressing the first coating layer 12a by the elastic part 144 to more uniformly planarize the entire top surface of the first coating layer 12a.

Accordingly, the scope of the present invention is defined by the appended claims more than the foregoing description and the exemplary embodiments described therein. Various modifications made within the meaning of an equivalent of the claims of the invention and within the claims are to be regarded to be in the scope of the present invention.

### [Description of the Symbols]

- 100:: Apparatus for manufacturing electrode
- 110:: Supply member
- 120:: Attachment member
- 130:: First injection member
- 140:: Brush member
- 150:: Second injection member
- 160:: Removing member

## Claims

1. An apparatus for manufacturing an electrode, the apparatus comprising:
a supply member configured to supply a collector;
an attachment member configured to attach a coating paper to a top surface of the collector supplied by the supply member at set intervals; and
a first injection member that operates to inject an electrode active material to the top surface of the collector, thereby forming a first coating layer when the collector passes through a first section and stops so as not to inject the electrode active material when the coating paper attached to the collector passes through the first section.

2. The apparatus of claim 1, wherein the coating paper comprises:
an adhesive portion which is disposed on each of both ends in a longitudinal direction of the collector and is attached to the collector; and
a non-adhesive portion which is disposed between the adhesion portions and is not attached to the collector,
wherein the adhesive portion pattern-adheres to the collector through the patterned adhesive layer.

3. The apparatus of claim 1, further comprising:
a brush member configured to comb an entire top surface of the first coating layer applied to the collector to planarize the entire top surface of the first coating layer and form a comb pattern mark; and
a second injection member which operates to inject the electrode active material to the top surface of the first coating layer, thereby forming a second coating layer when the collector passing through the brush member passes through the second section and stops so as not to inject the electrode active material when the coating paper attached to the collector passes through the second section,
wherein a portion of the electrode active material injected by the second injection member is introduced into the comb pattern mark formed on the first coating layer to increase in bonding force between the first coating layer and the second coating layer.

4. The apparatus of claim 3, wherein the second injection member applies the second coating layer to a thickness less than that of the first coating layer.

5. The apparatus of claim 3, wherein the brush member comprises:
a rotary roller provided above the collector; and
a comb part into which a plurality of comb hairs provided on the rotary roller to comb the top surface of the first coating layer applied to the collector are implanted.

6. The apparatus of claim 5, wherein the comb part is detachably coupled to a coupling groove formed in the rotary roller.

7. The apparatus of claim 6, wherein an elastic part configured to elastically support the comb part coupled to the coupling groove is provided in the coupling groove.

8. The apparatus of claim 5, wherein the brush member further comprises an adjustment part by which the rotary roller moves in a direction toward or opposite to the collector to adjust a distance between the rotary roller and the collector.

9. The apparatus of claim 2, further comprising a removing member configured to remove the coating paper attached to the collector,
wherein the removing member has a long rod shape and is inserted between the non-adhesive portion of the coating paper and the collector to push the coating paper in a direction that is away from the collector, thereby removing the coating paper.

10. A method for manufacturing an electrode, the method comprising:
a supply step (S10) of supplying a collector;
an attachment step (S20) of attaching a coating paper to a top surface of the collector at set intervals; and
a first coating step (S30) in which a first injection member operates to inject an electrode active material to a top surface of the collector so as to form a first coating layer when the collector passes through a first section and stops so as not to inject the electrode active material when the coating paper attached to the collector passes through the first section.

11. The method of claim 10, further comprising:
after the first coating step (S30), a combing step (S40) of combing a top surface of the first coating layer applied to the collector to planarize the top surface of the first coating layer and simultaneously form a comb pattern mark;
after the combing step (S40), a second coating step (S50) in which a second injection member supply member operates to inject the electrode active material to the top surface of the first coating layer so as to form a second coating layer when the collector passes through a second section and stops so as not to inject the electrode active material when the coating paper attached to the collector passes through the second section; and
a removing step (S60) of removing the coating paper attached to the collector to complete an electrode on which the coating layer is formed at certain intervals,
wherein, in the second coating step (S50), a portion of the electrode active material injected to the top surface of the first coating layer is introduced into the comb pattern mark formed on the first coating layer to increase in bonding force between the first coating layer and the second coating layer.

12. The method of claim 10, wherein, in the attachment step (S20), the coating paper is attached to the collector through an adhesive portion formed on each of both ends of the coating paper to form an adhesive area, and a non-adhesive area spaced apart from the collector is formed through a non-adhesive portion between the adhesive portions.

13. The method of claim 11, wherein, in the combing step (S40), the top surface of the first coating layer is combed using a comb part, into which a plurality of comb hairs coupled to a rotary roller are implanted, to planarize the top surface of the first coating layer and simultaneously form the comb pattern mark.

14. The method of claim 11, wherein, in the removing step (S60), the coating paper is pushed in a direction that is away from the collector through a non-adhesive area between the coating paper and the collector so as to be removed from the collector.

15. An electrode comprising:
a collector; and
a coating layer applied to the collector at set intervals,
wherein the coating layer comprises a firs coating layer applied to a top surface of the collector and a second coating layer applied to the top surface of the first coating layer,
the comb pattern mark is formed on the top surface of the first coating layer, and
a portion of the second coating layer applied to the top surface of the first coating layer is introduced into the comb pattern mark to increase in bonding force between the first coating layer and the second coating layer.
